# EUROPÄISCHE PATENTANMELDUNG

(11) **EP 4 375 262 A1**
(43) Veröffentlichungstag der Anmeldung: **29.05.2024**
(21) Anmeldenummer: 22209343.7
(22) Anmeldetag: 24.11.2022
(51) Int. Cl.: C04B 40/06, C08G 18/32, C08G 18/38, C08G 18/72, C08G 18/78, C08G 18/79, C09J 175/02

(54) **MEHRKOMPONENTEN-HARZSYSTEM UMFASSEND EINE ISOCYANATMISCHUNG**

(71) Anmelder: Hilti Aktiengesellschaft, 9494 Schaan (LI)
(72) Erfinder: Plenk, Christian, 86916 Kaufering (DE); Kumru, Memet-Emin, 86199 Augsburg (DE); Bürgel, Thomas, 86899 Landsberg (DE)
(74) Vertreter: Hilti Aktiengesellschaft Corporate Intellectual Property

(57) **Zusammenfassung**

Die vorliegende Erfindung betrifft ein Mehrkomponenten-Harzsystem umfassend (i) mindestens eine Isocyanatkomponente (A) umfassend mindestens ein nichtcyklisches aliphatisches Polyisocyanat und mindestens ein cycloaliphatisches Polyisocyanat mit einer mittleren NCO-Funktionalität von etwa 2 oder größer und (ii) mindestens eine Aminkomponente (B) umfassend mindestens ein gegenüber Isocyanatgruppen reaktives organisches Amin mit einer mittleren NH-Funktionalität von etwa 2 oder größer. Die Verwendung des cycloaliphatischen Polyisocyanats zusätzlich zum nichtcyklischen aliphatischen Polyisocyanat bewirkt, dass bei einer Untergrundtemperatur deutlich oberhalb von 23°C, wie insbesondere bei etwa 100°C, eine höhere Verbundspannung erzielt wird, als dies mit einem Vergleichs-Mehrkomponenten-Harzsystem, in welchem das cycloaliphatische Polyisocyanat fehlt (welches beispielsweise nur ein nichtcyklisches aliphatisches Polyisocyanat umfasst), der Fall ist. Die vorliegende Erfindung betrifft ferner die Verwendung eines derartigen Mehrkomponenten-Harzsystems zur chemischen Befestigung von Konstruktionselementen in Vertiefungen, insbesondere Löchern (beispielsweise Bohrlöchern) oder Spalten, sowie die Verwendung als Klebstoff.

## Beschreibung

Die vorliegende Erfindung betrifft ein Mehrkomponenten-Harzsystem umfassend (i) mindestens eine Isocyanatkomponente (A) umfassend mindestens ein nichtcyklisches aliphatisches Polyisocyanat und mindestens ein cycloaliphatisches Polyisocyanat mit einer mittleren NCO-Funktionalität von etwa 2 oder größer und (ii) mindestens eine Aminkomponente (B) umfassend mindestens ein gegenüber Isocyanatgruppen reaktives organisches Amin mit einer mittleren NH-Funktionalität von etwa 2 oder größer. Die Verwendung des cycloaliphatischen Polyisocyanats zusätzlich zum nichtcyklischen aliphatischen Polyisocyanat bewirkt, dass bei einer Untergrundtemperatur deutlich oberhalb von 23°C, wie insbesondere bei etwa 100°C, eine höhere Verbundspannung erzielt wird, als dies mit einem Vergleichs-Mehrkomponenten-Harzsystem, in welchem das cycloaliphatische Polyisocyanat fehlt (welches beispielsweise nur ein nichtcyklisches aliphatisches Polyisocyanat umfasst), der Fall ist. Die vorliegende Erfindung betrifft ferner die Verwendung eines derartigen Mehrkomponenten-Harzsystems zur chemischen Befestigung von Konstruktionselementen in Vertiefungen, insbesondere Löchern (beispielsweise Bohrlöchern) oder Spalten, sowie die Verwendung als Klebstoff.

Im Bauwesen werden Harzsysteme zur chemischen Befestigung von Konstruktionselementen, wie beispielsweise Ankerstangen, Bewehrungseisen und Schrauben, in Bohrlöchern oder Spalten von Bauwerken eingesetzt. Derartige Harzsysteme werden auch als "chemische Dübel" bezeichnet, wobei ein chemischer Dübel in der Regel eine Mörtelmasse ist, also neben den das Harz bildenden Komponenten des Harzsystems noch Füllstoff enthält. Gleichermaßen spielen Harzsysteme eine wichtige Rolle für die Verwendung als Klebstoff.

Diese Harzsysteme können als einheitliche Harzmasse vorliegen, oder als System aus mehreren Komponenten. Üblicherweise sind Harzsysteme kommerziell als ein Mehrkomponenten-Harzsystem erhältlich. Unter einem Mehrkomponenten-Harzsystem ist ein Harzsystem mit mehreren Komponenten, typischerweise zwei Komponenten (Zwei-Komponenten-System), mit (i) mindestens einer Komponente (A) umfassend eine härtbare Verbindung, und (ii) mindestens einer Komponente (B) umfassend einen Härter für besagte härtbare Verbindung, sowie gegebenenfalls weiteren separaten Komponenten zu verstehen. Die Komponenten befinden sich in separaten Behältern, so dass sie während der Lagerung und vor der Anwendung nicht miteinander in Berührung kommen und nicht miteinander reagieren können. Zur bestimmungsgemäßen Verwendung eines Mehrkomponenten-Harzsystems werden die Komponenten (A) und (B) und gegebenenfalls weitere Komponenten am gewünschten Einsatzort vermischt, so dass dort die Härtungsreaktion stattfinden kann.

Zur Aufbewahrung vor der Nutzung eignen sich Patronen, beispielsweise aus Kunststoff, Keramik oder Glas, in denen die Komponenten durch zerstörbare Abgrenzungswandungen oder integrierte separate zerstörbare Behältnisse voneinander getrennt angeordnet sind; beispielsweise als ineinander verschachtelte Patronen, bevorzugt Zweikammerpatronen. Zur Aufbewahrung vor der Nutzung sind aber insbesondere Mehr- oder bevorzugt Zweikomponentenkartuschen üblich, in deren Kammern die Komponenten (A) und (B) eines Mehrkomponenten-Harzsystems getrennt voneinander enthalten sind. Durch Zerstörung der Abgrenzungen in den Patronen bzw. Ausdrücken der Kartuschen durch beispielsweise einen Statikmischer hindurch werden die beiden oder mehreren Komponenten vermischt. Dadurch wird eine Härtungsreaktion, d.h. eine Polymerisation, in Gang gebracht und das Harz gehärtet.

In einem Mehrkomponenten-Harzsystem können andere, übliche Bestandteile, wie beispielsweise Füllstoffe, Additive, Beschleuniger, Inhibitoren, Rheologieadditive, Lösungsmittel und Reaktivverdünner, in einer oder beiden Komponenten (A) und/oder (B), sowie optional weiteren Komponenten enthalten sein. Mehrkomponenten-Harzsysteme können gegebenenfalls auch Füllstoffe enthalten, welche selbst durch hydraulisches Abbinden zur Verfestigung beitragen können, wie im Falle von Zement.

Als chemische Dübel sind vor allem Mehrkomponenten-Harzsysteme auf der Basis von Methacrylatharzen sowie auf der Basis von Epoxidharzen bekannt. Diese Harzsysteme eignen sich jedoch oft nur beschränkt für den Einsatz bei sehr hohen Temperaturen, insbesondere bei Temperaturen, welche oberhalb von 80°C oder sogar bei 100°C oder höher liegen. Für Einsätze in heißen Regionen bzw. bei heißen Umgebungstemperaturen zum Beispiel infolge von direkter Sonneneinstrahlung besteht daher ein Bedarf für hierfür besser geeignete Harzsysteme. Zudem ist eine ausreichende Verbundspannung von chemischen Dübeln bei hohen Temperaturen auch im Brandfall wichtig, um die Zeitspanne zu verlängern, in der ein chemischer Dübel trotz der durch den Brand verursachten hohen Temperaturen noch hält (und damit beispielsweise das Herabfallen von mit dem chemischen Dübel befestigten Gebäudeteilen oder den Einsturz eines brennenden Gebäudes verzögert, im besten Falle so lange, bis alle Personen aus dem brennenden Gebäude geflohen sind).

Außerdem eignen sich Mehrkomponenten-Harzsysteme auf der Basis von Methacrylatharzen eher nicht als Klebstoffe (beispielsweise zur klebenden Verbindung von zwei Flächen).

Neben der Weiterentwicklung und Verbesserung der bestehenden Mehrkomponenten-Harzsysteme werden daher zunehmend auch andere als die vorgenannten Harzsysteme auf ihre Eignung als Basis für chemische Dübel untersucht. Zunehmend werden Polyurethane und Polyharnstoffe, also Polymere auf Polyisocyanatbasis, als Harze für chemische Dübel in Betracht gezogen.

So beschreibt die EP 3 447 078 A1 einen chemischen Dübel, der aus einer Mehrkomponentenmasse hergestellt wird, welcher eine Polyisocyanatkomponente (A) und eine Polyasparaginsäureesterkomponente (B) umfasst. Bei Vermischen der beiden Komponenten entsteht in einer Polyadditionsreaktion Polyharnstoff, welcher das Harz als Bindemittel der Mörtelmasse bildet.

Aus der DE 10 2008 018 861 A1 sind Mehrkomponenten-Systeme auf der Grundlage von Polyurethanen bekannt, die aus einem oder mehreren Di- und/oder Polyisocyanaten, einem oder mehreren Di- und/oder Polyolen oder Di- und/oder Polyaminen oder einer oder mehreren di- und/oder polyfunktionellen Amino-, Hydroxy- und/oder Amino- und Hydroxyverbindungen gebildet sind.

Aufgabe der vorliegenden Erfindung ist es, ein Mehrkomponenten-Harzsystem auf Basis von Polyisocyanat zur Verfügung zu stellen, welches für Befestigungszwecke geeignet ist. Eine aus einem solchen Mehrkomponenten-Harzsystem erzeugte Mörtelmasse soll im Vergleich zu herkömmlichen chemischen Dübeln, auch im Vergleich zu herkömmlichen chemischen Dübeln auf Isocyanatbasis, bei höheren Temperaturen einsetzbar sein, vorteilhafterweise bei vergleichbar hoher Auszugsfestigkeit unter Referenzbedingungen. Insbesondere ist es Aufgabe der vorliegenden Erfindung, eine Mörtelmasse auf Basis von Polyisocyanaten zur Verfügung zu stellen, die eine verbesserte Auszugsfestigkeit (Verbundspannung) bei hohen Temperaturen, insbesondere bei Temperaturen von etwa 80°C oder höher, oder sogar von etwa 100°C oder höher, zeigt.

Diese Aufgabe wird gelöst durch das in den Ansprüchen definierte Mehrkomponenten-Harzsystem und dessen hierin beschriebene Verwendung.

Bevorzugte Ausführungsformen sind in den Unteransprüchen angegeben, die wahlweise miteinander kombiniert werden können.

Gegenstand der Erfindung ist ein Mehrkomponenten-Harzsystem umfassend:
a. eine Isocyanatkomponente (A), und
b. eine Aminkomponente (B) umfassend mindestens ein gegenüber Isocyanatgruppen reaktives organisches Amin mit einer mittleren NH-Funktionalität von etwa 2 oder größer.

Die Isocyanatkomponente (A) umfasst mindestens ein nichtcyklisches aliphatisches Polyisocyanat (A1) mit einer mittleren NCO-Funktionalität von etwa 2 oder größer und mindestens ein cycloaliphatisches Polyisocyanat (A2) mit einer mittleren NCO-Funktionalität von etwa 2 oder größer. Das Mengenverhältnis (A1:A2) (w/w) beträgt von 1:0,1 bis 1:10, bevorzugt von 1:0,5 bis 1:5, bevorzugter von 1:0,5 bis 1:1,5.

Gegenstand der Erfindung ist auch eine Harzmasse hergestellt durch das Vermischen der Isocyanatkomponente (A) und der Aminkomponente (B) des erfindungsgemäßen Mehrkomponenten-Harzsystems.

Gegenstand der Erfindung ist auch die Verwendung einer Harzmasse hergestellt aus einem erfindungsgemäßen Mehrkomponenten-Harzsystem als Klebstoff, insbesondere als Klebstoff zur Befestigung von Konstruktionselementen an einem Bauwerk oder an einem Teil eines Bauwerks.

Gegenstand der Erfindung ist auch die Verwendung einer Harzmasse hergestellt aus einem erfindungsgemäßen Mehrkomponenten-Harzsystem zur chemischen Befestigung von Konstruktionselementen in Vertiefungen, insbesondere in (Bohr)löchern oder Spalten.

Die Verwendung erfolgt typischerweise bei einer Untergrundtemperatur von -10°C bis 120°C, bevorzugt von 0°C bis 110°C, stärker bevorzugt von 10°C bis 105°C, noch bevorzugter von 23°C bis 100°C. Die Anwendungstemperatur, also die Untergrundtemperatur, bei der die noch nicht ausgehärtete Harzmasse angewendet wird, beispielsweise durch Einbringen in ein Bohrloch, liegt typischerweise bei -10°C bis 40°C, bevorzugt bei 0°C bis 30°C, noch bevorzugter bei etwa 23°C. In einer besonders bevorzugten Ausführungsform erfolgt die Verwendung bei einer Untergrundtemperatur von 23°C oder höher, bevorzugt von 50°C oder höher, noch bevorzugter bei einer Untergrundtemperatur von 80°C oder höher, insbesondere bei einer Untergrundtemperatur von etwa 100°C oder höher. In dieser Ausführungsform ist die Temperatur typischerweise die In-Service-Temperatur, also eine Temperatur, welcher die Harzmasse erst nach ihrem Aushärten vorübergehend oder dauerhaft ausgesetzt ist. Der Temperaturbereich von 80°C bis 120°C ist besonders bevorzugt, noch bevorzugter ist der Temperaturbereich von 90°C bis 110°C, und insbesondere ist eine Untergrundtemperatur von etwa 100°C bevorzugt. Die hier angegebene Untergrundtemperatur liegt entweder bereits bei Einsatz des Mehrkomponentenharzes vor, oder wird (bevorzugt) erst nach dem Aushärten des Mehrkomponentenharzes erreicht. So kann beispielsweise ein Einsatz des Mehrkomponentenharzes bei einer Untergrundtemperatur ("Anwendungstemperatur") von etwa 23°C erfolgen, und erst danach werden Untergrundtemperaturen ("In-Service-Temperaturen") oberhalb von 23°C wie beispielsweise von 80°C bis 110°C erreicht.

Außerdem erfolgt die Verwendung typischerweise auf bzw. in einem in Bauwerken vorkommenden Untergrund wie Stahl, Beton, Holz oder Ziegel.

Die Erfindung beruht auf der Erkenntnis, dass die gleichzeitige Verwendung eines nichtcyklischen aliphatischen Polyisocyanats (A1) mit einem cycloaliphatischen Polyisocyanat (A2) bewirkt, dass - bei etwa gleicher Referenzverbundspannung bei 23°C - die Verbundspannung bei höheren Untergrundtemperaturen wie etwa 100°C deutlich erhöht wird. Dies ist ein Vorteil des erfindungsgemäßen Mehrkomponenten-Harzsystems gegenüber einem Harzsystem ohne den Zusatz von cycloaliphatischem Polyisocyanat. Denn diese erhöhte Verbundspannung erlaubt einen Einsatz (insbesondere als chemischer Dübel) auch dann, wenn die aus dem Harzsystem hergestellte Harzmasse bei ihrer Anwendung oder nach ihrer Aushärtung vorübergehend oder dauerhaft höheren Untergrundtemperaturen ausgesetzt ist oder ausgesetzt sein könnte (beispielsweise bei erhöhter Sonneneinstrahlung oder einem Brand).

Gegenstand der Erfindung ist daher auch die Verwendung einer Isocyanatkomponente (A) umfassend mindestens ein nichtcyklisches aliphatisches Polyisocyanat (A1) mit einer mittleren NCO-Funktionalität von etwa 2 oder größer und mindestens ein cycloaliphatisches Polyisocyanat (A2) mit einer mittleren NCO-Funktionalität von etwa 2 oder größer, in einem Mengenverhältnis (A1:A2) (w/w) von 1:0,1 bis 1:10, bevorzugt von 1:0,5 bis 1:5, bevorzugter von 1:0,5 bis 1:1,5, in einem Mehrkomponenten-Harzsystem umfassend eine Aminkomponente (B) umfassend mindestens ein gegenüber Isocyanatgruppen reaktives organisches Amin mit einer mittleren NH-Funktionalität von etwa 2 oder größer zur Herstellung einer Mörtelmasse mit erhöhter Verbundspannung bei 80 - 120°C, bevorzugt bei 90 - 110°C, bevorzugter bei etwa 100°C, im Vergleich zu einer Mörtelmasse, welche mit einer Isocyanatkomponente (A) hergestellt wird, welche sich von der verwendeten Isocyanatkomponente (A) dadurch unterscheidet, dass sie kein cycloaliphatisches Polyisocyanat umfasst.

Gegenstand der Erfindung ist daher auch die Verwendung eines cycloaliphatischen Polyisocyanats (A2) mit einer mittleren NCO-Funktionalität von etwa 2 oder größer, bevorzugt von Isophorondiisocyanat, zur Erhöhung der Verbundspannung einer Mörtelmasse bei 80 - 120°C, bevorzugt bei 90 - 110°C, bevorzugter bei etwa 100°C, wobei die Mörtelmasse hergestellt ist aus:
(i) einer Isocyanatkomponente (A) umfassend mindestens ein nichtcyklisches aliphatisches Polyisocyanat (A1) mit einer mittleren NCO-Funktionalität von etwa 2, welches bevorzugt ein Polyisocyanat auf Basis von HDI und/oder PDI ist, und
(ii) einer Aminkomponente (B) umfassend mindestens ein gegenüber Isocyanatgruppen reaktives organisches Amin mit einer mittleren NH-Funktionalität von etwa 2 oder größer,
wobei das cycloaliphatische Polyisocyanat (A2) mit einer mittleren NCO-Funktionalität von etwa 2 oder größer als zusätzliches Polyisocyanat neben dem nichtcyklischen aliphatischen Polyisocyanat (A1) in der Isocyanatkomponente (A) verwendet wird oder einen Teil des nichtcyklischen aliphatischen Polyisocyanats (A1) in der Isocyanatkomponente (A) ersetzt.

Die vorliegende Erfindung verwendet deswegen in der Komponente (A) eine Mischung aus mindestens einem nichtcyklischen aliphatischen Polyisocyanat und mindestens einem cycloaliphatischen Polyisocyanat.

Im Sinne der Erfindung haben die hier und in der nachfolgenden Beschreibung verwendeten Begriffe die folgende Bedeutung:
- *"Mehrkomponenten-Harzsystem"* bezeichnet ein Harzsystem, das mehrere voneinander getrennt gelagerte Komponenten umfasst, wobei das Harzsystem mindestens eine Harzkomponente (A) und mindestens eine Härterkomponente (B) umfasst, so dass eine Härtung erst nach dem Mischen aller Komponenten erfolgt. In einer bevorzugten Ausführungsform ist ein Mehrkomponenten-Harzsystem ein Zwei-Komponenten-Harzsystem.
- *"Harzmasse"* bezeichnet eine reaktionsfähige Masse umfassend einen härtbaren Inhaltsstoff (im Rahmen der vorliegenden Erfindung: ein Polyisocyanat) und einen geeigneten Härter für den härtbaren Inhaltsstoff. Erfindungsgemäß wird diese Harzmasse typischerweise durch Mischen der Harzkomponente (A) (erfindungsgemäß ist dies die Isocyanatkomponente) und der Härterkomponente (B) (erfindungsgemäß ist dies die Aminkomponente) erhalten und anschließend als chemischer Dübel oder als Klebstoff verwendet.
- "*Isocyanate*" sind Verbindungen, die eine funktionelle Isocyanatgruppe -N=C=O aufweisen und durch die Struktureinheit R-N=C=O charakterisiert werden.
- "*Polyisocyanate*" sind Verbindungen, die mindestens zwei funktionelle Isocyanatgruppen -N=C=O aufweisen; Diisocyanate, die auch unter die Definition von Polyisocyanat fallen, werden beispielsweise durch die Struktur O=C=N-R-N=C=O charakterisiert und haben damit eine NCO-Funktionalität von 2.
- "*Amine*" sind Verbindungen mit einer funktionellen NH-Gruppe, die durch Austausch von einem oder zwei Wasserstoffatomen durch Kohlenwasserstoffgruppen aus Ammoniak abgeleitet sind und die allgemeinen Strukturen RNH₂ (primäre Amine) und R₂NH (sekundäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)).
- *"mittlere NCO-Funktionalität"* beschreibt die gemittelte Anzahl an reaktiven Isocyanat-Gruppen pro Mol eines Polyisocyanats oder einer Mischung aus mehreren Polyisocyanaten. Sie wird für eine Mischung nach der Formel: mittlere NCO-Funktionalität (Mischung) = Σ NCO-Funktionalität (Polyisocyanat i) / ni, also der Summe der NCO-Funktionalität der Einzelpolyisocyanate i geteilt durch die Anzahl der Einzelpolyisocyanate i, ermittelt.
- "*NH-Funktionalität*" beschreibt die Anzahl aktiver Wasserstoffatome, die mit einer Isocyanatgruppe reagieren können, in einer Aminogruppe.
- *"mittlere NH-Funktionalität"* gibt die Anzahl der an ein Stickstoffatom gebundenen Wasserstoffatome in einem Amin an. Demnach weist bspw. ein primäres Monoamin eine mittlere NH-Funktionalität von 2, ein primäres Diamin eine mittlere NH-Funktionalität von 4, ein Amin mit 3 sekundären Aminogruppen eine mittlere NH-Funktionalität von 3 auf und ein Diamin mit einer primären und einer sekundären Aminogruppe eine mittlere NH-Funktionalität von 3 auf. Die mittlere NH-Funktionalität kann sich auch nach den Angaben der Anbieter von Aminen richtet, wobei die tatsächlich angegebene NH-Funktionalität von der theoretischen mittleren NH-Funktionalität, wie sie hierin verstanden wird, abweichen kann. Durch den Ausdruck "mittlere" wird ausgedrückt, dass es sich um die NH-Funktionalität der Verbindung und nicht die NH-Funktionalität der in den Verbindung enthaltenen Aminogruppe(n) handelt. Die Aminogruppen können dabei primäre oder sekundäre Aminogruppen sein. Das Amin kann entweder nur primäre oder nur sekundäre Aminogruppen oder sowohl primäre als auch sekundäre Aminogruppen enthalten. Die mittlere NH-Funktionalität wird für eine Mischung nach der Formel: mittlere NH-Funktionalität (Mischung) = Σ NH-Funktionalität (Amin j) / nj, also der Summe der NH-Funktionalität der Einzelamine j geteilt durch die Anzahl der Einzelamine j, ermittelt.
- "*Isocyanatkomponente (A)*" bzw. *"Komponente (A)"* beschreibt eine Komponente des Mehrkomponenten-Harzsystems, welche mindestens ein Polyisocyanat und ggf. mindestens einen Füllstoff und/oder mindestens ein Rheologieadditiv und/oder weitere Additive umfasst. Im Rahmen der vorliegenden Erfindung umfasst die Komponente (A) mindestens ein nichtcyklisches aliphatisches Polyisocyanat und mindestens ein cycloaliphatisches Polyisocyanat.
- "*Aminkomponente (B)*" bzw. *"Komponente (B)"* beschreibt eine Komponente des Mehrkomponenten-Harzsystems, welche mindestens ein gegenüber Isocyanatgruppen reaktives Amin und ggf. mindestens einen Füllstoff und/oder mindestens ein Rheologieadditiv und/oder weitere Additive umfasst.
- "*aliphatische Verbindungen*" sind acyclische oder cyclische, gesättigte oder ungesättigte, lineare oder verzweigte Kohlenstoffverbindungen, ausgenommen aromatische Verbindungen.
- "*cycloaliphatische Verbindungen*" sind aliphatische Verbindungen umfassend eine carbocyclische Ringstruktur, ausgenommen Benzolderivate oder andere aromatische Systeme. Sie können an der carbocyklischen Ringstruktur einen oder mehrere lineare, verzweigte oder unverzweigte aliphatische Substituenten tragen.
- "*nichtcyklische aliphatische Verbindungen*" sind aliphatische Verbindungen, in denen keine Ringstruktur enthalten ist. Sie sind also lineare aliphatische Verbindungen. Sie können verzweigt oder unverzweigt sein und sind bevorzugt unverzweigt.
- "*aromatische Verbindungen*" sind Verbindungen, die der Hückel (4n+2)-Regel folgen.
- *"araliphatische Verbindungen"* sind Verbindungen, deren Grundgerüst einen aromatischen Teil und einen aliphatischen Teil besitzt.
- *"poly", "Poly"* als Präfix bedeutet, dass zwei oder mehr der sich an dieses Präfix anschließenden Gruppen in einer Verbindung enthalten sind. Im Rahmen der vorliegenden Erfindung bedeutet dies insbesondere, dass Diisocyanate vom Begriff "*Polyisocyanate*" umfasst sind.
- *"Untergrundtemperatur"* bezeichnet die Temperatur des Untergrundes an der Kontaktfläche zur auszuhärtenden oder ausgehärteten Harzmasse. Die Untergrundtemperatur ist abhängig von der Umgebungstemperatur, im Bauwesen typischerweise die Außentemperatur, sowie möglicher Erwärmung durch Sonneneinstrahlung und externer Wärmezufuhr durch Wärmequellen wie etwa einem Heizblock oder einem Heizlüfter, oder durch einen Brand. Die Untergrundtemperatur kann mit Hilfe eines Infrarot-Thermometers an der Oberfläche des Untergrunds bestimmt werden. Zu unterscheiden sind die Untergrundtemperatur bei Anwendung der noch nicht ausgehärteten Harzmasse (z.B. beim Einbringen eines chemischen Dübels in ein Bohrloch) (auch als "Anwendungstemperatur" bezeichenbar) und die Untergrundtemperatur, nachdem die Harzmasse ausgehärtet ist (z.B. die Temperatur, die nach Aushärtung eines chemischen Dübels, der eine Ankerstange in Mauerwerk befestigt, dadurch im Untergrund entsteht, dass sich das Mauerwerk durch Sonneneinstrahlung aufheizt) (auch als "In-Service-Temperatur" bezeichenbar).
- *"ein", "eine", "einer" als* Artikel vor einer chemischen Verbindungsklasse, z.B. vor dem Wort "Füllstoff", dass eine oder mehrere unter diese chemische Verbindungsklasse fallende Verbindungen, z.B. verschiedene "Füllstoffe", gemeint sein können.
- *"mindestens ein", "mindestens eine", "mindestens einer"* zahlenmäßig *"ein oder mehrere"*; in einer bevorzugten Ausführungsform ist mit diesem Begriff zahlenmäßig *"ein"*, *"eine", "einer"* gemeint.
- *"etwa"* vor einem Zahlenwert erlaubt eine Abweichung von ±10 %, in einer bevorzugten Ausführungsform ±5 %, in einer stark bevorzugten Ausführungsform ±1 % von diesem Zahlenwert, in der am stärksten bevorzugten Ausführungsform bedeutet *"etwa",* dass genau dieser Zahlenwert gemeint ist, also eine Abweichung von ±0 %.
- *"enthalten", "umfassen"* und *"beinhalten",* dass neben den genannten Bestandteilen noch weitere vorhanden sein können; diese Begriffe sind einschließlich gemeint und umfassen daher auch *"bestehen aus"*; *"bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus".*

Alle in diesem Text genannten Normen (z.B. DIN-Normen) wurden in der zum Anmeldetag der vorliegenden Anmeldung aktuellen Ausgabe verwendet. Alle Handelsnamen entsprechen den Produkten, wie sie unter diesen Handelsnamen zum Zeitpunkt des Anmeldetages der vorliegenden Anmeldung verfügbar waren.

Wie vorstehend ausgeführt ist ein Mehrkomponenten-Harzsystem gemäß der vorliegenden Erfindung ein System, das zwei oder mehrere räumlich voneinander getrennt gelagerte Komponenten umfasst. In einer bevorzugten Ausführungsform handelt es sich bei einem erfindungsgemäßen Mehrkomponenten-Harzsystem um ein Zwei-Komponenten-Harzsystem. Im Folgenden werden die Bestandteile der Komponenten (A) und (B) eines erfindungsgemäßen Mehrkomponenten-Harzsystems beispielhaft anhand eines Zwei-Komponenten-Systems näher erläutert.

Erfindungsgemäße Polyisocyanat-Amin-Systeme sind Mehrkomponenten-Systeme, bei denen je eine NCO-Gruppe der in Komponente (A) enthaltenen härtbaren Polyisocyanate mit je einer Amingruppe des in Komponente (B) enthaltenen mindestens einen Amins reagiert. Die Isocyanatkomponente (A) und die Aminkomponente (B) werden erfindungsgemäß in einem Mengenverhältnis vermischt, bei dem das numerische Verhältnis von mittlerer NCO-Funktionalität in der Isocyanatkomponente (A) zu mittlerer NH-Funktionalität in der Aminkomponente (B) von 0,3 bis 2,0, bevorzugt von 0,7 bis 1,8, weiter bevorzugt von 1,0 bis 1,5, und am meisten bevorzugt von 1,0 bis 1,3 beträgt. In einer besonders bevorzugten Ausführungsform beträgt dieses numerische Verhältnis etwa 1,25.

### Polyisocyanate in der Isocyanatkomponente (A)

Die Isocyanatkomponente (A) eines Mehrkomponenten-Harzsystems gemäß der Erfindung umfasst mindestens ein nichtcyklisches aliphatisches Polyisocyanat und mindestens ein cycloaliphatisches Polyisocyanat mit einer mittleren NCO-Funktionalität von etwa 2 oder größer.

Bevorzugt umfasst die Isocyanatkomponente (A) kein aromatisches Polyisocyanat, das mindestens eine nichtcyklische aliphatische Polyisocyanat und das mindestens eine cycloaliphatische Polyisocyanat sind also die einzigen Polyisocyanate in der Komponente (A).

In einer bevorzugten Ausführungsform umfasst die Isocyanatkomponente (A) als Polyisocyanate nur ein nichtcyklisches aliphatisches Polyisocyanat und nur ein cycloaliphatisches Polyisocyanat.

Als das mindestens eine nichtcyklische aliphatische und mindestens eine cycloaliphatische Polyisocyanat in Komponente (A) der vorliegenden Erfindung kommt eine Vielzahl der hierfür dem Fachmann bekannten und kommerziell erhältlichen Verbindungen, einzeln oder in beliebigen Mischungen untereinander, in Betracht.

Jedes erfindungsgemäß verwendete Polyisocyanat hat bevorzugt eine mittlere NCO-Funktionalität von etwa 2 oder größer, stärker bevorzugt von etwa 2 bis etwa 10, noch stärker bevorzugt von etwa 2 bis etwa 6, am bevorzugtesten von etwa 2 bis etwa 4.

Bevorzugt werden nichtcyklische aliphatische bzw. cycloaliphatische Polyisocyanate verwendet, die ein Kohlenstoffgrundgerüst (ohne die enthaltenen NCO-Gruppen) von 3 bis 30 Kohlenstoffatomen, bevorzugt von 4 bis 20 Kohlenstoffatomen aufweisen.

Beispiele für nichtcyklische aliphatische Polyisocyanate sind Bis-(isocyanatoalkyl)ether oder Alkandiisocyanate, wie Methandiisocyanat, Propandiisocyanate, Butandiisocyanate, Pentandiisocyanate (PDI), Hexandiisocyanate (z.B. Hexamethylendiisocyanat, HDI), Heptandiisocyanate (z.B. 2,2-Dimethylpentan-1,5-diisocyanat, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat, 5-Methylnonandiisocyanat), Dekandiisocyanate, Dekantriisocyanate, Undekandiisocyanate, Undekantriisocyanate, Dodecandiisocyanate, Dodecantriisocyanate.

Bevorzugte nichtcyklische aliphatische Polyisocyanate sind Hexamethylendiisocyanat (HDI), Pentandiisocyanate (PDI), Trimethyl-HDI (TMDI), 2-Methylpentan-1,5-diisocyanat (MPDI), und Gemische dieser Polyisocyanate.

Beispiele für cycloaliphatische Polyisocyanate sind 1,3- sowie 1,4-Bis-(isocyanatomethyl)cyclohexane (H₆XDI), 3-Isocyanatomethyl-3,5,5-trimethylcyclohexyl-isocyanat (Isophorondiisocyanat, IPDI), Bis-(4-isocyanatocyclohexyl)methan (H₁₂MDI), Bis-(isocyanatomethyl)norbornan (NBDI), 3(4)-lsocyanatomethyl-1-methyl-cyclohexylisocyanat (IMCI), Octahydro-4,7-methano-1H-indendiemthyldiisocyanat, Norbornendiisocyanat, 5-Isocyanato-1-(isocyanatomethyl)-1,3,3-trimethylcyclohexan, Ureylenbis(p-phenylenmethylen-p-phenylen)diisocyanat.

Bevorzugte cycloaliphatische Polyisocyanate sind Isophorondiisocyanat (IPDI), 1,3-sowie 1,4-Bis(isocyanatomethyl)cyclohexan (H₆XDI), Bis(isocyanatomethyl)norbornan (NBDI), 3(4)-lsocyanatomethyl-1-methyl-cyclohexylisocyanat (IMCI) und 4,4'-Bis(isocyanatocyclohexyl)methan (H₁₂MDI), und Gemische dieser Polyisocyanate.

Die Polyisocyanate können auch Präpolymere (insbesondere Homopolymere), Biurete (insbesondere Diisocyanat-Biuret-Oligomerisationsprodukte), Isocyanurate, Iminooxadiazindione, Uretdione und/oder Allophanate sein, die auf Basis der in der vorausgehenden Absätzen genannten Isocyanatverbindungen sind und beispielsweise durch Umsetzung der in den vorausgehenden Absätzen genannten Isocyanatverbindungen mit Polyolen oder Polyaminen, einzeln oder als Gemisch, hergestellt wurden. Die Polyisocyanate können auch Mischungen dieser Verbindungen sein. Insbesondere können die Polyisocyanate Präpolymere oder Biurete oder Mischungen daraus sein. Die geforderte mittlere NCO-Funktionalität von etwa 2 oder größer besteht auch bei erfindungsgemäß geeigneten Präpolymeren, Biureten, Isocyanuraten, Iminooxadiazindionen, Uretdionen und Allophanaten und deren Mischungen. Bevorzugt liegt die mittlere NCO-Funktionalität hier bei 2,5 bis 5,5, bevorzugter bei 2,7 bis 4 und besonders bevorzugt bei 2,9 bis 3,6.

Besonders bevorzugt ist das mindestens eine nichtcyklische aliphatische Polyisocyanat ein Polyisocyanat auf Basis eines Diisocyanats, insbesondere eines Diisocyanats ausgewählt aus der Gruppe bestehend aus Hexamethylendiisocyanat (HDI), Pentandiisocyanat (PDI), und Mischungen aus zwei oder mehr davon. Ganz besonders bevorzugt ist das mindestens eine nichtcyklische aliphatische Polyisocyanat HDI oder ein Präpolymer (insbesondere ein Homopolymer) oder Biuret-Oligomerisationsprodukt davon, oder eine Mischung daraus. Bevorzugt liegt die mittlere NCO-Funktionalität hier bei 2,5 bis 5,5, bevorzugter bei 2,7 bis 4 und besonders bevorzugt bei 2,9 bis 3,6. Als bevorzugte Beispiele hierfür seien die in den Beispielen genannten Polyisocyanate genannt.

Besonders bevorzugt ist das mindestens eine cycloaliphatische Polyisocyanat ein Polyisocyanat auf Basis eines Diisocyanats, insbesondere auf Basis eines Isophorondiisocyanats (IPDI) oder einer Mischung aus IPDI mit einem nichtcyklischen aliphatischen Diisocyanat, insbesondere einer Mischung aus IPDI und HDI. Ganz besonders bevorzugt ist das mindestens eine cycloaliphatische Polyisocyanat IPDI oder ein Präpolymer (insbesondere ein Homopolymer) davon, oder eine Mischung daraus mit einem Präpolymer (insbesondere Homopolymer) von HDI. Bevorzugt liegt die mittlere NCO-Funktionalität hier bei 2,5 bis 5,5, bevorzugter bei 2,7 bis 4 und besonders bevorzugt bei 2,9 bis 3,6. Als bevorzugte Beispiele hierfür seien die in den Beispielen genannten cycloaliphatischen Polyisocyanate genannt.

Beispiele für geeignete, kommerziell erhältliche Polyisocyanate sind Desmodur^{®} N 3900, Desmodur^{®} N 100, Desmodur^{®} N 3200, Desmodur^{®} N 3300, Desmodur^{®} ultra N 3300, Desmodur^{®} N3400, Desmodur^{®} N3500, Desmodur^{®} N 3600, Desmodur^{®} ultra N 3600, Desmodur^{®} N 3700, Desmodur^{®} N 3800, Desmodur^{®} eco N 7300, Desmodur^{®} XP 2675, Desmodur^{®} 2714, Desmodur^{®} 2731, Desmodur^{®} N 3400, Desmodur^{®} XP 2679, Desmodur^{®} XP 2731, Desmodur^{®} XP 2489, Desmodur^{®} E 2863 XP, Desmodur^{®} E 3370, Desmodur^{®} XP 2599, Desmodur^{®} XP 2617, Desmodur^{®} XP 2406, Desmodur^{®} XP 2838, Desmodur^{®} XP 2840, Desmodur^{®} NZ 300, Desmodur^{®} E 30600, Bayhydur XP 2547, Bayhydur XP 2451/1, Bayhydur Ultra 307, Desmodur^{®} H (jeweils erhältlich von Covestro AG), Tolonate HDB, Tolonate HDB-LV, Tolonate HDT, Tolonate HDT-LV LM, Tolonate HDT-LV2, Tolonate XF 450, Tolonate X FLO 100, Tolonate X F 800 (erhältlich von Vencorex), Basonat HB 100, Basonat HI 100 NG, Basonat HI 2000 NG, Basonat HI 100 (erhältlich von BASF), Takenate 500, Takenate 600, Stabio D-376N (erhältlich von Mitsui), Duranate 24A-100, Duranate TPA-100 (erhältlich von Asahi Kasai), Coronate HXR, Coronate HXLV, Coronate HX, Coronate HK (erhältlich von Tosoh). Von diesen kommerziell erhältlichen nichtcyklischen aliphatischen Polyisocyanaten und cycloaliphatischen Polyisocyanaten sind solche auf HDI-Basis bzw. IPDI-Basis (wie die in den Beispielen verwendeten Polyisocyanate) bevorzugt.

Das Verhältnis (A1:A2) (w/w) zwischen dem mindestens einen nichtcyklischen aliphatischen Polyisocyanat (A1) mit einer mittleren NCO-Funktionalität von etwa 2 oder größer und dem mindestens ein cycloaliphatisches Polyisocyanat (A2) mit einer mittleren NCO-Funktionalität von etwa 2 oder größer beträgt vorteilhafterweise von 1:0,1 bis 1:10, bevorzugt von 1:0,5 bis 1:5, bevorzugter von 1:0,5 bis 1:1,5.

Der Gesamtanteil aus mindestens einem nichtcyklischen Polyisocyanat und mindestens einem cycloaliphatischen Polyisocyanat in der durch Mischung der Komponenten (A) und (B) erhaltenen Harzmasse beträgt vorzugsweise von etwa 5 bis etwa 60 Gew.-%, bevorzugt von etwa 10 bis etwa 50 Gew.-%, bevorzugter von etwa 15 bis etwa 35 Gew.-%, und noch bevorzugter von etwa 20 bis etwa 30 Gew.-% bezogen auf das Gesamtgewicht der durch Mischung der Komponenten (A) und (B) erhaltenen Harzmasse.

In der Komponente (A) beträgt der Gesamtanteil aus mindestens einem nichtcyklischen Polyisocyanat und mindestens einem cycloaliphatischen Polyisocyanat vorzugsweise von etwa 10 bis etwa 100 Gew.-%, bevorzugt von etwa 25 bis etwa 60 Gew.-%, bevorzugter von etwa 30 bis etwa 50 Gew.-%.

Das mindestens eine nichtcyklische aliphatische Polyisocyanat und das mindestens eine cycloaliphatische Polyisocyanat sind in einer besonders bevorzugten Ausführungsform die in den Beispielen genannten Polyisocyanate, und zwar bevorzugt in den dort genannten Gewichtsanteilen.

### Amine in der Aminkomponente (B)

Die Aminkomponente (B), welche im Mehrkomponenten-Harzsystem reaktionsinhibierend getrennt von der Isocyanatkomponente (A) vorliegt, umfasst mindestens ein gegenüber Isocyanatgruppen reaktives Amin mit einer mittleren NH-Funktionalität von etwa 2 oder größer.

Das mindestens eine gegenüber Isocyanatgruppen reaktive Amin kann grundsätzlich jedes gegenüber Isocyanatgruppe reaktive Amin sein, welches dem Fachmann bekannt ist. Somit ist das mindestens eine gegenüber Isocyanatgruppen reaktive Amin typischerweise ein primäres oder sekundäres Amin. In einer bevorzugten Ausführungsform ist das mindestens eine gegenüber Isocyanatgruppen reaktive Amin ein primäres Amin.

Generell können auch Mischungen verschiedener Amine verwendet werden.

Beispiele für geeignete gegenüber Isocyanatgruppen reaktive Amine sind im Folgenden angegeben, ohne jedoch den Umfang der Erfindung einzuschränken. Diese können sowohl einzeln als auch in beliebigen Mischungen untereinander verwendet werden. Beispiele für geeignete Amine sind: 1,2-Diaminoethan(ethylendiamin), 1,2-Propandiamin, 1,3- Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1,3- Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 2,4-Diamino-3,5-dimethylthiotoluol (Dimethylthiotoluoldiamin, DMTDA) bzw. ein Isomerengemisch aus 6-Methyl-2,4-bis(methylthio)phenylen-1,3-diamin und 2-Methyl-4,6-bis(methylthio)phenylen-1,3-diamin (ebenfalls als DMTDA bezeichnet, z.B. Ethacure^{®} 300), 3-Aminomethyl-3,5,5-trimethylcyclohexylamin (Isophorondiamin, IPDA), Diaminodicyclohexylmethan (PACM), Diethyltoluoldiamin (DETDA), 3,3'-Diaminodiphenylsulfon (33Dapson), 4,4'-Diaminodiphenylsulfon (44Dapson), gemischte polycyclische Amine (MPCA) (z.B. Ancamine^{®} 2168), Dimethyldiaminodicyclohexylmethan (z.B. Laromin^{®} C260), 2,2-Bis(4-aminocyclohexyl)propan, (3(4),8(9)Bis(aminomethyldicyclo[5.2.1.02'6]decan (Isomerengemisch tricyclischer primärer Amine; TCD-Diamin), Methylcyclohexyldiamin (MCDA), N,N'-Diaminopropyl-2-methyl-cyclohexan-1,3-diamin, N,N'-Diaminopropyl-4-methylcyclohexan-1,3-diamin, N-(3-Aminopropyl)cyclohexylamin, 2-(2,2,6,6-Tetramethylpiperidin-4-yl)propan-1,3-diamin, 2-Methylpentandiamin (z.B. DYTEK^{®} A), N-Ethylaminopiperazin (N-EAP), N-Aminoethyl-piperazin (N-AEP), 2,4,6-Trimethyl-m-phenylendiamin, 2,4,6-Tri(propan-2-yl)benzol-1,3-diamin, 4-Ethyl-2,6-di(propan-2-yl)benzol-1,3-diamin, 4-Methyl-2,6-di(propan-2-yl)benzol-1,3-diamin, 2,5-Bis(methylsulfonyl)-1,4-benzoldiamin, Chlorodiethylmethylbenzoldiamine (z.B. 5-Chloro-4,6-diethyl-2-methyl-1,3-benzoldiamin, 5-Chloro-4,6-diethyl-6-methyl-1,3-benzoldiamin), 4-Fluoro-5-(1-methylethyl)-1,2-benzoldiamin, 4,4'-Methylen-bis[N-(1-methylpropyl)phenylamin], 4,4'-Methylenbis(2,6-diethylanilin) (MBDA), 4,4'-Methylenbis(N-sec-butylcyclohexanamin) (z.B. Clearlink^{®} 1000), 4,4'-Methylen-bis[N-(1-methylpropyl)-3,3'-dimethylcyclohexanamin] (z.B. Clearlink^{®} 3000), 4,4'-Methylen-bis(3-chloro-2,6-diethylanilin) (MBCDA), das Reaktionsprodukt von 2-Propennitril mit 3-Amino-1,5,5-trimethylcyclohexanmethanamin (z.B. Jefflink^{®} 745), 3-((3-(((2-Cyanoethyl)amino)methyl)-3,5,5-trimethylcyclohexyl)amino)propiononitril (z.B. Jefflink^{®} 136 oder Baxxodur^{®} PC136), N,N'-Di-sec-butyl-p-phenylendiamin, 2,4,6-Trimethyl-m-phenylendiamin und 2,4,6-Trimethyl-5-nitro-1,3-benzoldiamin sowie Mischungen aus zwei oder mehr dieser Amine.

Auch Amidoamine, Polyamidoamine, Polyamidoimidazoline, polycycloaliphatische Amine, modifizierte Amidoamine, Polyamide, Mannich-Basen und Polycarbamide eignen sich als das Amin.

Beispiele für geeignete, kommerziell erhältliche Amine sind Aradur^{®} 1152, Aradur^{®} 125-2, Aradur^{®} 140-2, Aradur^{®} 223, Aradur^{®} 283, Aradur^{®} 350, Aradur^{®} 360, Aradur^{®} 33225, Aradur^{®} 450, Aradur^{®} 955-2, Aradur^{®} 3282-1, Aradur^{®} 3376, Aradur^{®} 9130, Aradur^{®} 9140 (jeweils erhältlich von Huntsman); Ancamide^{®} 260A, Ancamide^{®} 500, Ancamide^{®} 503, Ancamide^{®} 506, Ancamide^{®} 700B75, Ancamide^{®} 910, Ancamide^{®} 2050, Ancamine^{®} 2167 Ancamide^{®} 2353, Ancamide^{®} 2386, Ancamide^{®} 2426, Ancamide^{®} 2443, Ancamide^{®} 2445, Ancamide^{®} 2573, Ancamide^{®} 2634, Ancamide^{®} 2652, Ancamide^{®} 2769, Ancamide^{®} 3011 Ancamide^{®} 3030, Ancamide^{®} 3200, Ancamide^{®} 3419, Ancamide^{®} 3444, Ancamide^{®} 3622, Ancamine^{®} 2759, Ancamine^{®} 2760, Ancamine^{®} 3456, Ancamine^{®} 1618, Ancamine^{®} 1769, Ancamine^{®} 2165, Ancamine^{®} 2168, Ancamine^{®} 2280, Ancamine^{®} 2410, Ancamine^{®} 2422, Ancamine^{®} 2432, Ancamine^{®} 2519, Ancamine^{®} 2609W, Ancamine^{®} 2672, Ancamine^{®} 2686, Ancamine^{®} 2692, Ancamine^{®} 2712M, Ancamine^{®} 2719, Ancamine^{®} 2726, Ancamine^{®} 2728, Ancamine^{®} 2739, Ancamine^{®} 2802, Ancamine^{®} 2806, Ancamine^{®} 3215 und Amicure^{®} IC-322 (jeweils erhältlich von Evonik); Baxxodur^{®} PC136; Clearlink^{®} 1000, Clearlink^{®} 3000; DYTEK@ A (erhältlich von Invista); Epilox^{®}-Härter H 14-50, Epilox^{®}-Härter H 14-51, Epilox^{®}-Härter M 1190, Epilox^{®}-Härter H15-15, Epilox^{®}-Härter H15-25, Epilox^{®}-Härter H15-40, Epilox^{®}-Härter H15-50, Epilox^{®}-Härter H15-60, Epilox^{®}-Härter M1148 (jeweils erhältlich von Leuna Harze); EPIKURE Curing Agent 3010, EPIKURE Curing Agent 3015, EPIKURE Curing Agent 3030, EPIKURE Curing Agent 3046, EPIKURE Curing Agent 3050, EPIKURE Curing Agent 3055, EPIKURE Curing Agent 3061, EPIKURE Curing Agent 3072, EPIKURE Curing Agent 3090, EPIKURE Curing Agent F205, EPIKURE Curing Agent 3100-ET-60, EPIKURE Curing Agent 3115, EPIKURE Curing Agent 3125, EPIKURE Curing Agent 3140, EPIKURE Curing Agent 3155, EPIKURE Curing Agent 3164, EPIKURE Curing Agent 3175, EPIKURE Curing Agent 3180-F-75 (jeweils erhältlich von Westlake); Ethacure^{®} 300, Ethacure^{®} 100 (wie beispielsweise Ethacure^{®} 100 Plus) (erhältlich von Albemarle); Jefflink^{®} 745, Jefflink^{®} 136; Laromin^{®} C260 (erhältlich von BASF); Unilink^{®} 4100, Unilink^{®} 4200.

Besonders bevorzugte Amine sind Diethyltoluoldiamin (DETDA, z.B. Ethacure^{®} 100 Plus), 2,4-Diamino-3,5-dimethylthiotoluol (Dimethylthiotoluoldiamin, DMTDA) bzw. ein Isomerengemisch aus 6-Methyl-2,4-bis(methylthio)phenylen-1,3-diamin und 2-Methyl-4,6-bis(methylthio)phenylen-1,3-diamin (ebenfalls als DMTDA bezeichnet, z.B. Ethacure^{®} 300), 4,4'-Methylen-bis[N-(1-methylpropyl)phenylamin] (z.B. Unilink^{®} 4200), 4,4'-Methylenbis(2,6-diethylanilin) (MBDA), 4,4'-Methylenbis(N-sec-butylcyclohexanamin) (z.B. Clearlink^{®} 1000), 3,3'-Diaminodiphenylsulfon (33Dapson), 4,4'-Diaminodiphenylsulfon (44Dapson), N,N'-Di-sec-butyl-p-phenylendiamin (z.B. Unilink^{®} 4100), 2,4,6-Trimethyl-m-phenylendiamin, 4,4'-Methylen-bis[N-(1-methylpropyl)-3,3'-dimethylcyclohexanamin] (z.B. Clearlink^{®} 3000), das Reaktionsprodukt von 2-Propennitril mit 3-Amino-1,5,5-trimethylcyclohexanmethanamin (z.B. Jefflink^{®} 745), 3-((3-(((2-Cyanoethyl)amino)methyl)-3,5,5-trimethylcyclohexyl)-amino)propiononitril (z.B. Jefflink^{®} 136 oder Baxxodur^{®} PC136), ein Gemisch aus DETDA und IPDA (z.B. Ethacure^{®} 270), ein Gemisch aus 4,4'-Methylenbis(N-sec-butylanilin), 4,4'-Methylenbis(2,6-diethylanilin) und Diethylmethylbenzoldiamin (z.B. Ethacure^{®} 520), 4,4'-Methylen-bis(3-chloro-2,6-diethylanilin) (MBCDA), Chlorodiethylmethylbenzoldiamine (z.B. 5-Chloro-4,6-diethyl-2-methyl-1,3-benzoldiamin, 5-Chloro-4,6-diethyl-6-methyl-1,3-benzoldiamin), Aradur^{®} 223, Aradur^{®} 33225, Ancamide^{®} 506, Ancamine^{®} 2167, Ancamide^{®} 2426, Ancamide^{®} 3011, Ancamide^{®} 3419, Amicure^{®} IC-322, Epilox^{®}-Härter H 14-50, Epilox^{®}-Härter H15-60, Epilox^{®}-Härter M1148, EPIKURE Curing Agent 3050, EPIKURE Curing Agent F205, Ethacure^{®} 300, Ethacure^{®} 100 Plus.

Ganz besonders bevorzugte Amine sind 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin (DMTDA, z.B. Ethacure^{®} 300), Diethyltoluoldiamin (DETDA, z.B. Ethacure^{®} 100 Plus), 4,4'-Methylen-bis[N-(1-methylpropyl)-phenylamin] (z.B. Unilink^{®} 4200), 4,4'-Methylen-bis(3-chloro-2,6-diethylanilin) (MBCDA), 4,4'-Methylen-bis(2,6-diethylanilin) (MBDA), Chlorodiethylmethylbenzoldiamin, Aradur^{®} 33225, Ancamide^{®} 3419, Epilox^{®}-Härter H 14-50. Am bevorzugtesten sind DMTDA, DETDA, und Mischungen daraus.

Bevorzugt ist das mindestens eine gegenüber Isocyanatgruppen reaktive Amin ausgewählt aus der Gruppe der araliphatischen und aromatischen Amine, besonders bevorzugt aus der Gruppe der araliphatischen Amine. In einer bevorzugten Ausführungsform enthält die Aminkomponente Diethyltoluoldiamin (DETDA) und zusätzlich mindestens eines der hierin genannten gegenüber Isocyanatgruppen reaktiven Amine, bevorzugt mindestens eines der hierin genannten aromatischen Amine.

In einer besonders bevorzugten Ausführungsform umfasst die Aminkomponente (B) als Amine:
- Diethyltoluoldiamin (DETDA) und
- ein Isomerengemisch aus 6-Methyl-2,4-bis(methylthio)phenylen-1,3-diamin und 2-Methyl-4,6-bis(methylthio)phenylen-1,3-diamin (DMTDA).

Das DMTDA und das DETDA liegen in dieser bevorzugten Ausführungsform in einem Mengenverhältnis (DMTDA:DETDA) von etwa 17:1 bis etwa 1:1 (w/w) vor. Bevorzugt beträgt das Mengenverhältnis (DMTDA:DETDA) von etwa 15:1 bis etwa 1.1 (w/w), bevorzugter von etwa 12:1 bis etwa 1,5:1 (w/w), bevorzugter von etwa 10:1 bis etwa 1,5:1 (w/w).

Bevorzugt sind DMTDA und DETDA in dieser bevorzugten Ausführungsform die einzigen aromatischen Amine in der Aminkomponente. Bevorzugter sind DMTDA und DETDA die einzigen Amine in der Aminkomponente.

Jedoch kann die Aminkomponente in einer Ausführungsform neben dem DMTDA und dem DETDA auch mindestens ein weiteres gegenüber Isocyanatgruppen reaktives Amin umfassen. Bevorzugt weist dieses weitere Amin eine mittlere NH-Funktionalität von etwa 2 oder größer auf. Das weitere Amin kann entweder nur primäre oder nur sekundäre Aminogruppen, oder sowohl primäre als auch sekundäre Aminogruppen enthalten.

Sollte ein weiteres gegenüber Isocyanatgruppen reaktives Amin neben dem DETDA und DMTDA in der Aminkomponente (B) enthalten sein, so beträgt sein Anteil an der Gesamtmenge der Amine in der Komponente (B) maximal etwa 80 Gew.-%, bevorzugt maximal etwa 50 Gew.-%, bevorzugter maximal etwa 20 Gew.-%, noch bevorzugter maximal etwa 5 Gew.-% der Gesamtmenge der Amine.

Die Gesamtmenge an Aminen in der durch Mischung der Komponenten (A) und (B) erhaltenen Harzmasse beträgt vorzugsweise von etwa 3 bis etwa 30 Gew.-%, bevorzugter von etwa 5 bis etwa 25 Gew.-%, und noch bevorzugter von etwa 10 bis etwa 20 Gew.-% bezogen auf das Gesamtgewicht der durch Mischung der Komponenten (A) und (B) erhaltenen Harzmasse.

Die Gesamtmenge an Aminen in der Aminkomponente (B) beträgt vorzugsweise von 20 bis 100 Gew.-%, bevorzugt von 30 bis 70 Gew.-%, noch bevorzugter von 35 bis 70 Gew.-%, und noch bevorzugter von 40 bis 60 Gew.-% bezogen auf das Gesamtgewicht der Aminkomponente (B).

Das mindestens eine gegenüber Isocyanatgruppen reaktive Amin ist in einer besonders bevorzugten Ausführungsform eines der bzw. die in den Beispielen genannten reaktiven Amine, und zwar bevorzugt in den dort genannten Gewichtsanteilen.

### Mengenverhältnis Isocyanatkomponente (A) zu Aminkomponente (B)

Die Mengenverhältnisse der Isocyanatkomponente (A) und der Aminkomponente (B) des Mehrkomponenten-Harzsystems werden bevorzugt so gewählt, dass das numerische Verhältnis von mittlerer NCO-Funktionalität in der Isocyanatkomponente (A) zu mittlerer NH-Funktionalität in der Aminkomponente (B) von 0,3 bis 2,0, bevorzugt von 0,7 bis 1,8, weiter bevorzugt von 1,0 bis 1,5, und am meisten bevorzugt von 1,0 bis 1,3 beträgt. In einer besonders bevorzugten Ausführungsform beträgt dieses numerische Verhältnis etwa 1,25 (beispielsweise 1,26).

Durch Variation dieses Mengenverhältnisses kann beispielsweise die Aushärtedauer beeinflusst werden.

### Weitere Bestandteile der Komponenten (A) und (B)

Sowohl die Isocyanatkomponente (A) als auch die Aminkomponente (B) als auch beide Komponenten (A) und (B) umfassen typischerweise neben den Polyisocyanaten (A1) und (A2) bzw. dem mindestens einen Amin mindestens einen weiteren Bestandteil. Weitere übliche Bestandteile sind insbesondere Füllstoffe, Rheologieadditive und Verdicker (Thixotropiermittel).

Je nach weiterem Bestandteil kann es bevorzugt sein, dass der mindestens eine weitere Bestandteil nur in der Komponente (A), nur in der Komponente (B), oder in beiden Komponenten enthalten ist.

### Füllstoffe

Sowohl die Isocyanatkomponente (A) als auch die Aminkomponente (B) kann mindestens einen Füllstoff enthalten. Es ist bevorzugt, dass beide Komponenten, also sowohl die Isocyanatkomponente (A) als auch die Aminkomponente (B) jeweils mindestens einen Füllstoff enthalten.

Als Füllstoffe dienen bevorzugt anorganische Füllstoffe, insbesondere Quarz, Aluminiumoxide, Aluminiumsilikate (wie Zeolithe), Glas, Korund, Porzellan, Steingut, Schwerspat, Leichtspat, Gips, Talkum, Zemente (wie Portlandzement oder Aluminatzement), und/oder Kreide sowie deren Mischungen.

Die Füllstoffe können in Form von Partikeln (beispielsweise in Form von Pulvern, Sanden, oder Mehlen) oder Formkörpern (letzteres vorzugsweise in Form von Fasern oder Kugeln), zugesetzt werden. Durch eine geeignete Auswahl der Füllstoffe hinsichtlich Art und Partikelgrößenverteilung, Partikelgröße oder (Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner können silanisierte Quarzmehle, Feinquarzmehle und Feinstquarzmehl eingesetzt werden. Diese sind beispielsweise käuflich unter der Produktserie Silbond der Firma Quarzwerke erhältlich. Hierbei sind die Produktserien Silbond EST (Epoxysilan-modifiziert) und Silbond AST 25 (aminosilan-behandelt) besonders bevorzugt. Ferner können Aluminiumoxid-basierte Füllstoffe wie beispielsweise Aluminiumoxidfeinstfüller vom Typ ASFP der Firma Denka, Japan, (d₅₀ = 0,3 µm) oder Qualitäten wie DAW oder DAM mit den Typenbezeichnungen 45 (dso < 0,44 µm), 07 (dso > 8,4 µm), 05 (dso < 5,5 µm), 03 (dso < 4,1 µm) eingesetzt werden. Weiterhin können die oberflächenbehandelten Fein- und Feinstfüllstoffe vom Typ Aktisil AM 30 (aminosilan-behandelt, dso = 2,2 µm) und Aktisil EM (epoxysilanbehandelt, d₅₀=2,2 µm) von Hoffman Mineral verwendet werden. Auch Zeolithe können als Füllstoffe verwendet werden.

Die Füllstoffe können einzeln oder auch in beliebiger Mischung untereinander verwendet werden.

Besonders bevorzugt sind die in den Beispielen verwendeten Füllstoffe und Füllstoffmischungen, insbesondere in den dort beschriebenen Mengen und Mengenverhältnissen.

Der Gesamtfüllgrad einer Harzmasse aus den Komponenten (A) und (B) liegt, wenn mindestens ein Füllstoff vorhanden ist, in einem Bereich von >0 bis etwa 80 Gew.-%, bevorzugt in einem Bereich von etwa 10 bis etwa 70 Gew.%, noch bevorzugter in einem Bereich von etwa 20 bis etwa 60 Gew.-%, noch bevorzugter in einem Bereich von etwa 40 bis etwa 55 Gew.-%. Der Gesamtfüllgrad bezieht sich auf den gewichtsprozentualen Anteil an Füllstoff bezogen auf das Gesamtgewicht aus Komponente (A) und Komponente (B) in der Harzmasse.

Der Anteil der Füllstoffe in der Isocyanatkomponente (A), wenn ein Füllstoff darin vorhanden ist, liegt vorzugsweise bei etwa 20 bis etwa 80 Gew.-%, bevorzugt bei etwa 40 bis etwa 70 Gew.-%, noch bevorzugter bei etwa 50 bis etwa 65 Gew.-% bezogen auf das Gesamtgewicht der Harzkomponente (A). Der Anteil der Füllstoffe in der Aminkomponente (B), wenn ein Füllstoff darin vorhanden ist, liegt vorzugsweise bei etwa 10 bis etwa 70 Gew.-%, bevorzugt bei etwa 20 bis etwa 60 Gew.-%, bevorzugter bei etwa 40 bis etwa 55 Gew.-% bezogen auf das Gesamtgewicht der Aminkomponente (B).

### Verdicker und weitere optionale Bestandteile

In einer Ausführungsform kann/können die Isocyanatkomponente (A), die Aminkomponente (B) oder beide Komponenten mindestens einen Verdicker enthalten.

Geeignete Verdicker sind gegebenenfalls organisch nachbehandelte pyrogene Kieselsäure, Bentonite, Alkyl- und Methylcellulosen und Rhizinusölderivate, oder Gemische von zwei oder mehreren davon. Besonders bevorzugt ist organisch nachbehandelte pyrogene Kieselsäure.

In einer bevorzugten Ausführungsform umfasst die Komponente (A) und/oder Komponente (B) eines erfindungsgemäßen Mehrkomponenten-Harzsystems Quarzmehl und/oder -sand und Kieselsäure.

Ferner können Haftvermittler zur Verbesserung der Vernetzung eines Untergrunds (beispielsweise einer (Bohr)lochwand) mit einer aus einem Mehrkomponenten-Harzsystem hergestellten Epoxidharzmasse eingesetzt werden. Geeignete Haftvermittler sind Silane, die mindestens eine Si-gebundene hydrolysierbare Gruppe aufweisen.

Bevorzugte Beispiele für Haftvermittler sind 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyltriethoxysilan, 3-Aminopropyl-trimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan und Trimethoxysilylpropyldiethylentetramin sowie deren Mischungen. Weitere Silane sind beispielsweise in der EP 3 000 792 A1 beschrieben.

Weitere optionale Bestandteile sind Rheologieadditive zur Einstellung der Fließeigenschaften. Geeignete Rheologieadditive sind: Schichtsilikate wie Laponite, Bentonite oder Montmorillonit, Neuburger Kieselerde, pyrogene Kieselsäure, Polysaccharide, Polyacrylat-, Polyurethan- oder Polyharnstoffverdicker sowie Celluloseester.

Zur Optimierung können weiterhin Netz- und Dispergiermittel, Phlegmatisiermittel, Oberflächenadditive, Weichmacher wie Phthalsäure- oder Sebacinsäureester, Wachsadditive, Stabilisatoren, Antistatikmittel, Flexibilisatoren, Härtungskatalysatoren, weitere Steuerungsmittel für die Reaktionsgeschwindigkeit, Entschäumer & Entlüfter, Viskositätsreduzierer oder sonstige Prozessadditive zugesetzt werden.

Ebenso denkbar sind färbende Zusätze wie Farbstoffe oder Pigmente, beispielsweise zum unterschiedlichen Anfärben der Komponenten zur besseren Kontrolle von deren Durchmischung.

### Verwendung

Das erfindungsgemäße Mehrkomponenten-Harzsystem eignet sich insbesondere als chemischer Dübel zur chemischen Befestigung von Bauteilen wie Ankergewindestangen, Bewehrungseisen, Gewindehülsen und Schrauben in Vertiefungen, insbesondere (Bohrlöchern und Spalten, die in einen für Bauwerke typischen Untergrund eingebracht sind. Daneben eignet sich das erfindungsgemäße Mehrkomponenten-Harzsystem auch als Klebstoff.

Bei der Verwendung werden die Harzkomponente (A) und die Aminkomponente (B) in einer geeigneten Vorrichtung, beispielsweise einem Statikmischer oder einem Dissolver, gemischt, woraus eine Harzmasse resultiert.

Bei der Verwendung als "chemischer Dübel" zur chemischen Befestigung erfolgt die Mischung direkt vor oder in einem Loch (bevorzugt einem Bohrloch) oder Spalt, und die resultierende Harzmasse wird danach mittels einer bekannten Injektionsvorrichtung in das (ggf. zuvor gereinigte) Loch bzw. den Spalt eingebracht. Anschließend wird das zu fixierende Bauteil in die Harzmasse, welche hier bevorzugt eine Mörtelmasse ist, eingesetzt und justiert. Anschließend härtet die Masse aus.

Bei der Verwendung als Klebstoff wird die Harzmasse auf geeignete Art und Weise (Statikmischer, händisches Verrühren) gemischt und anschließend auf die zu verklebenden Teile aufgetragen.

Die Amine der Aminkomponente (B) reagieren mit den Isocyanatgruppen der Harzkomponente (A), so dass die Harzmasse unter Umgebungsbedingungen, etwa an der Baustelle, innerhalb einer gewünschten Zeit aushärtet. Diese chemische Reaktion ist von der Temperatur und der Feuchtigkeit in Umgebung und Untergrund, der chemischen Zusammensetzung des Untergrunds, sowie von den eingesetzten Bestandteilen der Komponenten (A) und (B) abhängig. Umgebungsbedingungen können variieren, wie z.B. hohe Temperaturen (z.B. 40°C oder höher) bei direkter starker Sonneneinstrahlung oder im Falle eines Feuers.

Ein erfindungsgemäßes Mehrkomponenten-Harzsystem wird bevorzugt für Bauzwecke eingesetzt. Der Begriff "für Bauzwecke" bedeutet das Baukleben sowie die Verwendung des Mehrkomponenten-Harzsystems als chemischer Dübel.

Der Einsatz erfolgt insbesondere auf bzw. in Ziegel, Beton, Gestein oder anderen mineralischen Untergründen, Stahl oder Holz. In einer besonders bevorzugten Ausführungsform erfolgt der Einsatz auf bzw. in Beton als Untergrund.

Die Verwendung als Klebstoff (beim Baukleben) erfolgt insbesondere zum Verkleben und für die strukturelle Verstärkung von Bauteilen aus Holz, Mauerwerk und anderen mineralischen Materialien, für die Armierung von Bauobjekten mit faserverstärkten Polymeren, für die chemische Befestigung auf Oberflächen aus Ziegel, Beton, Gestein, Holz, Stahl oder anderen mineralischen Materialien.

Die Verwendung als chemischer Dübel erfolgt insbesondere für die chemische Befestigung von Konstruktionselementen und Verankerungsmitteln, wie Anker(gewinde)stangen, Ankerbolzen, (Gewinde)stangen, (Gewinde)hülsen, Verstärkungseisen, Schrauben und dergleichen, in (Bohr)löchern oder Spalten in verschiedenen Untergründen, wie Mauerwerk, Beton, Ziegel, anderen mineralischen Materialien, Metallen (z.B. Stahl), Keramiken, Kunststoffen, Glas und Holz.

Ganz besonders bevorzugt dient ein erfindungsgemäßes Mehrkomponenten-Harzsystem zur chemischen Befestigung von Verankerungselementen in einem Loch (insbesondere einem Bohrloch) oder Spalt in einem Bausubstrat. Das Bausubstrat ist bevorzugt Beton.

Die Verwendung erfolgt typischerweise bei einer Untergrundtemperatur von -10°C bis 120°C, bevorzugt von 0°C bis 110°C, stärker bevorzugt von 10°C bis 105°C, noch bevorzugter von 23°C bis 100°C. Die Anwendungstemperatur, also die Untergrundtemperatur, bei der die noch nicht ausgehärtete Harzmasse angewendet wird, beispielsweise durch Einbringen in ein Bohrloch, liegt typischerweise bei -10°C bis 40°C, bevorzugt bei 0°C bis 30°C, noch bevorzugter bei etwa 23°C. In einer besonders bevorzugten Ausführungsform erfolgt die Verwendung bei einer Untergrundtemperatur von 23°C oder höher, bevorzugt von 50°C oder höher, noch bevorzugter bei einer Untergrundtemperatur von 80°C oder höher, insbesondere bei einer Untergrundtemperatur von etwa 100°C oder höher. In dieser Ausführungsform ist die Temperatur typischerweise die In-Service-Temperatur, also eine Temperatur, welcher die Harzmasse erst nach ihrem Aushärten vorübergehend oder dauerhaft ausgesetzt ist. Der Temperaturbereich von 80°C bis 120°C ist besonders bevorzugt, noch bevorzugter ist der Temperaturbereich von 90°C bis 110°C, und insbesondere ist eine Untergrundtemperatur von etwa 100°C bevorzugt. Die hier angegebene Untergrundtemperatur liegt entweder bereits bei Einsatz des Mehrkomponentenharzes vor, oder wird (bevorzugt) erst nach dem Aushärten des Mehrkomponentenharzes erreicht. So kann beispielsweise ein Einsatz des Mehrkomponentenharzes bei einer Untergrundtemperatur ("Anwendungstemperatur") von etwa 23°C erfolgen, und erst danach werden Untergrundtemperaturen ("In-Service-Temperaturen") oberhalb von 23°C wie beispielsweise von 80°C bis 110°C erreicht.

Für die Verwendung als chemischer Dübel im Baubereich, insbesondere bei großen Bauteilen, hängt die Untergrundtemperatur typischerweise von der Umgebungstemperatur ab.

Außerdem erfolgt die Verwendung als chemischer Dübel typischerweise auf einem in Bauwerken vorkommenden Untergrund wie Stahl, Beton, Holz, Gestein oder Ziegel. Bevorzugt ist der Untergrund Beton, beispielsweise der in den Beispielen verwendete Beton.

Die Erfindung beruht wie bereits oben dargestellt auf der Erkenntnis, dass die gleichzeitige Verwendung eines nichtcyklischen aliphatischen Polyisocyanats (A1) mit einem cycloaliphatischen Polyisocyanat (A2) bewirkt dass - bei etwa gleicher Referenzverbundspannung bei 23°C - die Verbundspannung bei höheren Untergrundtemperaturen wie etwa 100°C deutlich erhöht wird. Dies ist ein Vorteil des erfindungsgemäßen Mehrkomponenten-Harzsystems gegenüber einem Harzsystem ohne den Zusatz von cycloaliphatischem Polyisocyanat. Denn diese erhöhte Verbundspannung erlaubt einen Einsatz (insbesondere als chemischer Dübel) auch dann, wenn die aus dem Harzsystem hergestellte Harzmasse bei ihrer Anwendung oder nach ihrer Aushärtung vorübergehend oder dauerhaft höheren Untergrundtemperaturen ausgesetzt ist oder ausgesetzt sein könnte (beispielsweise bei erhöhter Sonneneinstrahlung oder einem Brand).

Gegenstand der Erfindung ist daher auch die Verwendung einer Isocyanatkomponente (A) umfassend mindestens ein nichtcyklisches aliphatisches Polyisocyanat (A1) mit einer mittleren NCO-Funktionalität von etwa 2 oder größer und mindestens ein cycloaliphatisches Polyisocyanat (A2) mit einer mittleren NCO-Funktionalität von etwa 2 oder größer, in einem Mengenverhältnis (A1:A2) (w/w) von 1:0,1 bis 1:10, bevorzugt von 1:0,5 bis 1:5, bevorzugter von 1:0,5 bis 1:1,5, in einem Mehrkomponenten-Harzsystem umfassend eine Aminkomponente (B) umfassend mindestens ein gegenüber Isocyanatgruppen reaktives organisches Amin mit einer mittleren NH-Funktionalität von etwa 2 oder größer zur Herstellung einer Mörtelmasse mit erhöhter Verbundspannung bei 80 - 120°C, bevorzugt bei 90 - 110°C, bevorzugter bei etwa 100°C, im Vergleich zu einer Mörtelmasse, welche mit einer Isocyanatkomponente (A) hergestellt wird, welche sich von der verwendeten Isocyanatkomponente (A) dadurch unterscheidet, dass sie kein cycloaliphatisches Polyisocyanat umfasst.

Gegenstand der Erfindung ist daher auch die Verwendung eines cycloaliphatischen Polyisocyanats (A2) mit einer mittleren NCO-Funktionalität von etwa 2 oder größer, bevorzugt von Isophorondiisocyanat, zur Erhöhung der Verbundspannung einer Mörtelmasse bei 80 - 120°C, bevorzugt bei 90 - 110°C, bevorzugter bei etwa 100°C, wobei die Mörtelmasse hergestellt ist aus:
(i) einer Isocyanatkomponente (A) umfassend mindestens ein nichtcyklisches aliphatisches Polyisocyanat (A1) mit einer mittleren NCO-Funktionalität von etwa 2, welches bevorzugt ein Polyisocyanat auf Basis von HDI und/oder PDI ist, und
(ii) einer Aminkomponente (B) umfassend mindestens ein gegenüber Isocyanatgruppen reaktives organisches Amin mit einer mittleren NH-Funktionalität von etwa 2 oder größer,
wobei das cycloaliphatische Polyisocyanat (A2) mit einer mittleren NCO-Funktionalität von etwa 2 oder größer als zusätzliches Polyisocyanat neben dem nichtcyklischen aliphatischen Polyisocyanat (A1) in der Isocyanatkomponente (A) verwendet wird oder einen Teil des aliphatischen Polyisocyanats (A1) in der Isocyanatkomponente (A) ersetzt.

In letztgenanntem Mehrkomponenten-Harzsystem wird ein Teil des nichtcyklischen aliphatischen Polyisocyanats (A1) durch das cycloaliphatische Polyisocyanat ersetzt. Dieses Ersetzen eines "Teils" bedeutet hier bevorzugt, dass so viel nichtcyklisches aliphatisches Polyisocyanat (A1) durch cycloaliphatisches Polyisocyanat (A2) ersetzt wird, dass ein wie oben beschriebenes Verhältnis (A1:A2) erzielt wird.

### Bevorzugte Ausführungsformen

### Komponente (A):

In einer bevorzugten Ausführungsform umfasst die Komponente (A) eines erfindungsgemäßen Mehrkomponenten-Harzsystems HMDI oder ein Präpolymer oder Biuret davon als Polyisocyanat (A1), Isophorondiisocyanat (IPDI) oder ein Präpolymer oder Biuret davon als Polyisocyanat (A2), mindestens einen Füllstoff, mindestens einen Verdicker, und mindestens ein Rheologieadditiv.

In einer bevorzugteren Ausführungsform umfasst die Komponente (A) eines erfindungsgemäßen Mehrkomponenten-Harzsystems HMDI Homopolymer als Polyisocyanat (A1) und IPDI Homopolymer als Polyisocyanat (A2), Quarzmehl und/oder Quarzsand, Zeolith, Kieselsäure und ein Silan.

Das Verhältnis (A1:A2) (w/w) beträgt vorteilhafterweise von 1:0,1 bis 1:10, bevorzugt von 1:0,5 bis 1:5, bevorzugter von 1:0,5 bis 1:1,5.

In einer besonders bevorzugten Ausführungsform umfasst die Komponente (A) eines erfindungsgemäßen Mehrkomponenten-Harzsystems von etwa 13 bis etwa 26 Gew.-% HMDI Homopolymer und von etwa 1 bis etwa 15 Gew.-% IPDI Homopolymer, von etwa 30 Gew.-% bis etwa 50 Gew.-% Quarzmehl und/oder Quarzsand, von etwa 2 bis etwa 3 Gew.-% Zeolith, von etwa 0,5 bis etwa 1,5 Gew.-% Kieselsäure, und von etwa 1 bis etwa 2,5 Gew.-% Silan, wobei alle Gew.-% auf das Gesamtgewicht der durch Mischung der Komponenten (A) und (B) erhaltenen Harzmasse bezogen sind. In dieser besonders bevorzugten Ausführungsform beträgt das Verhältnis (A1:A2) (w/w) von 1:0,5 bis 1:5, bevorzugter von 1:0,5 bis 1:1,5.

Besonders bevorzugt umfasst die Komponente (A) die Isocyanatkombination wie in den Beispielen beschrieben, und zusätzlich bevorzugt mindestens einen Füllstoff.

Am bevorzugtesten ist die Komponente (A) die im Beispiel beschriebene Komponente (A).

### Komponente (B):

In einer bevorzugten Ausführungsform umfasst die Komponente (B) eines erfindungsgemäßen Mehrkomponenten-Harzsystems DMTDA und DETDA als einzige Amine, mindestens einen Füllstoff und Kieselsäure.

Das DMTDA und das DETDA liegen in dieser bevorzugten Ausführungsform in einem Mengenverhältnis (DMTDA:DETDA) von etwa 10:1 bis etwa 1,5:1 (w/w) vor.

In einer stark bevorzugten Ausführungsform umfasst die Komponente (B) eines erfindungsgemäßen Mehrkomponenten-Harzsystems von etwa 5 bis etwa 25 Gew.-%, bevorzugter von etwa 10 bis etwa 20 Gew.-%, DMTDA plus DETDA, von etwa 8 bis etwa 15 Gew.-% Quarzmehl und/oder Quarzsand, und von etwa 0,2 bis etwa 0,9 Gew.-% Kieselsäure, wobei alle Gew.-% auf das Gesamtgewicht der durch Mischung der Komponenten (A) und (B) erhaltenen Harzmasse bezogen sind. Das DMTDA und das DETDA liegen in dieser Ausführungsform in einem Mengenverhältnis (DMTDA:DETDA) von etwa 10:1 bis etwa 1,5:1 (w/w) vor.

Besonders bevorzugt umfasst die Komponente (B) die DMTDA-DETDA-Kombination wie in den Beispielen beschrieben als einzige Amine, und zusätzlich bevorzugt mindestens einen Füllstoff.

Am bevorzugtesten ist die Komponente (B) die in den Beispielen beschriebene Komponente (B).

### Komponenten A+B

Ganz besonders bevorzugt als Bestandteile eines erfindungsgemäßen Mehrkomponenten-Harzsystems sind die Kombinationen aus den Polyisocyanaten mit DMTDA und DETDA (als einzige Amine im Harzsystem), welche in den Beispielzusammensetzungen verwendet werden, insbesondere in den dort verwendeten Gewichtsanteilen und ganz besonders bevorzugt in Kombination mit den dort verwendeten anderen Bestandteilen der Komponenten (A) und (B). Am bevorzugtesten für ein erfindungsgemäßes Mehrkomponenten-Harzsystem aus Komponenten (A) und (B) sind diejenigen Zusammensetzungen der Komponenten (A) und (B), welche als Kombinationen in den Beispielen beschrieben werden.

Die Isocyanatkomponente (A) und die Aminkomponente (B) werden dabei in einem Mengenverhältnis vermischt, bei dem das numerische Verhältnis von mittlerer NCO-Funktionalität in der Isocyanatkomponente (A) zu mittlerer NH-Funktionalität in der Aminkomponente (B) von 1,0 bis 1,5, und bevorzugt von 1,0 bis 1,3 beträgt. In einer besonders bevorzugten Ausführungsform beträgt dieses numerische Verhältnis etwa 1,25, insbesondere etwa 1,26.

In einer besonders bevorzugten Ausführungsform eines erfindungsgemäßen Mehrkomponenten-Harzsystems umfasst die Komponente (A) von etwa 13 bis etwa 26 Gew.-% HMDI Homopolymer als Polyisocyanat (A1) und von etwa 1 bis etwa 15 Gew.-% IPDI Homopolymer also Polyisocyanat (A2), von etwa 30 Gew.-% bis etwa 50 Gew.-% Quarzmehl und/oder Quarzsand, von etwa 2 bis etwa 3 Gew.-% Zeolith, von etwa 0,5 bis etwa 1,5 Gew.-% Kieselsäure, und von etwa 1 bis etwa 2,5 Gew.-% Silan, wobei alle Gew.-% auf das Gesamtgewicht der durch Mischung der Komponenten (A) und (B) erhaltenen Harzmasse bezogen sind, und wobei beträgt das Verhältnis (A1:A2) (w/w) von 1:0,5 bis 1:5, bevorzugter von 1:0,5 bis 1:1,5 beträgt; und die Komponente (B) von etwa 5 bis etwa 25 Gew.-%, bevorzugter von etwa 10 bis etwa 20 Gew.-%, DMTDA plus DETDA, von etwa 8 bis etwa 15 Gew.-% Quarzmehl und/oder Quarzsand, und von etwa 0,2 bis etwa 0,9 Gew.-% Kieselsäure, wobei alle Gew.-% auf das Gesamtgewicht der durch Mischung der Komponenten (A) und (B) erhaltenen Harzmasse bezogen sind, und wobei das DMTDA und das DETDA in einem Mengenverhältnis (DMTDA:DETDA) von etwa 10:1 bis etwa 1,5:1 (w/w) vorliegen. Hier werden die Isocyanatkomponente (A) und die Aminkomponente (B) in einem Mengenverhältnis vermischt, bei dem das numerische Verhältnis von mittlerer NCO-Funktionalität in der Isocyanatkomponente (A) zu mittlerer NH-Funktionalität in der Aminkomponente (B) von 1,0 bis 1,3 beträgt. Besonders bevorzugt beträgt dieses numerische Verhältnis etwa 1,25 (beispielsweise 1,26). Am bevorzugtesten ist die im Beispiel beschriebene Kombination aus Komponente (A) und (B).

Die Erfindung wird im Folgenden anhand von Ausführungsbeispielen weiter beschrieben, die jedoch nicht in einem einschränkenden Sinn verstanden werden sollen.

### AUSFÜHRUNGSBEISPIELE

**Tabelle 1: Verwendete Bestandteile der Komponenten (A) und (B)**

| | | |
|---|---|---|
| Hexamethylen-1,6-diisocyanat Homopolymer | Desmodur^{®} N 3900: niedrigviskoses, aliphatisches Polyisocyanat-Harz auf Basis von Hexamethylendiisocyanat (HDI) (Äquivalentgewicht ca. 179; NCO-Gehalt nach M105-ISO 11909 23,5+-0,5 Gew.-%, monomeres HDI nach M106-ISO 10283 < 0,25 %; Viskosität (23°C) nach M014-ISO 3219/A.3 730 +-100 mPa·s) | Covestro AG |
| Hexamethylen-1,6-diisocyanat Biuret Oligomerisationsprodukt | Desmodur^{®} N 3200 | Covestro AG |
| Mischung aus Hexamethylen-1,6-diisocyanat Homopolymer und Isophorondiisocyanat Homopolymer | Desmodur^{®} XP 2838 | Covestro AG |
| Mischung aus 6-Methyl-2,4-bis(methylthio)phenylen-1,3-diamin und 2-Methyl-4,6-bis(methylthio)phenylen-1,3-diamin (DMTDA) | Ethacure^{®} 300 Curative (Dimethylthiotoluoldiamine 95-97 %, Monomethylthiotoluoldiamin 2- 3 %; Äquivalentgewicht mit Isocyanaten 107) | Albemarle Corporation |
| Diethyltoluoldiamin (DETDA) | Ethacure^{®} 100 Plus | Albemarle Corporation |
| 3-Glycidyloxypropyltrimethoxysilan | Dynasylan^{®} GLYMO | Evonik Resource Efficiency GmbH |
| Zeolithpulver | Synthetischer Zeolith; Purmol^{®} 3ST | Zeochem AG |
| Quarzmehl | Millisil^{®} W12 | Quarzwerke Frechen |
| Quarzsand | P10 | Strobel |
| Kieselsäure | Cab-O-Sil^{®} TS-720 | Cabot |

### Herstellung der Komponenten (A) und (B):

Die verwendeten Bestandteile aller (Vergleichs)beispiele und ihre Anteile in Gew.-% bezogen auf das Gesamtgewicht aus Komponente (A) plus (B) sind unten in Tabelle 2 aufgelistet.

Sowohl die Komponente (A) als auch die Komponente (B) wurden mittels eines Dissolvers (PC Laborsystem, Volumen 1L) hergestellt. Nachdem die Füllstoffe den flüssigen Bestandteilen der jeweiligen Komponente zugesetzt wurden, die sich in einem für den Dissolver geeigneten Becherglas oder Plastikeimer befanden, wurde die Komponente zunächst von Hand mit einem Holzspatel gemischt. Der Plastikeimer oder das Becherglas wurden dann am Scheibenrührer angebracht, die Abdeckung wurde geschlossen und ein Vakuum von 80 mbar erzeugt, um das Einbringen von Lufteinschlüsse in die Masse zu vermeiden. Der Rührvorgang lief acht Minuten bei 2.500 U / min.

Die so hergestellten Massen wurden dann luftblasenfrei in 3:1 2-Komponenten-Hartkartuschen (2K-Kartuschen) mit Statikmischer gefüllt.

### Bestimmung der Verbundspannung:

Zur Bestimmung der mit den aus den Komponenten (A) und (B) hergestellten Mörtelmassen erzielten Verbundspannungen wurde eine hochfeste Ankergewindestange M12 verwendet, die in ein hammergebohrtes Bohrloch mit einem Durchmesser von 14 mm und einer Bohrlochtiefe von 60 mm mit der jeweiligen Mörtelmasse in C20/25 Betonplatten eingedübelt wurde. Zum Eindübeln wurde das Bohrloch vom Bohrlochgrund her mit der jeweiligen zu prüfenden Mörtelmasse aus der 2K-Kartusche mit Statikmischer zu zwei Dritteln befüllt.

Zur Bestimmung der Referenzverbundspannung wurde nach einer Aushärtezeit von 24 h bei einer Temperatur von 23°C die Verbundspannung durch zentrisches Ausziehen der Ankergewindestange mit enger Abstützung (also Abstützung nahe am Bohrloch) ermittelt.

Zur Bestimmung der Verbundspannung bei 100°C wurde nach einer Aushärtezeit von 24 h bei einer Temperatur von 23°C die Betonplatte auf 100°C erhitzt und für 24 h bei dieser Temperatur gehalten. Sofort nach Entnahme der Betonplatte aus dem Ofen wurde die Verbundspannung bei 100°C durch zentrisches Ausziehen der Ankergewindestange mit enger Abstützung ermittelt.

**Tabelle 2: Zusammensetzung von Beispiel und Vergleichsbeispiel sowie Testergebnisse (Zusammensetzung in Gew.-% bezogen auf die verwendete Mischung aus (A) und (B); wo die Summe dieser Gew.-% nicht exakt 100% ergibt, ist dies Rundungsfehlern geschuldet)**

| **Bestandteile** | **V1*** | **A1** |
|---|---|---|
| **Komponente (A)** | | |
| Hexamethylen-1,6-diisocyanat Homopolymer (N3900) | 21,7 | 13,3 |
| Hexamethylen-1,6-diisocyanat Biuret Oligomerisationsprodukt (N3200) | 3,5 | - |
| Mischung aus Hexamethylen-1,6-diisocyanat Homopolymer und Isophorondiisocyanat Homopolymer (XP2838) | - | 13,3 |
| 3-Glycidyloxypropyltrimethoxysilan | 1,7 | 1,7 |
| Quarzmehl (W12) | 15,5 | 13,9 |
| Quarzsand | 31,8 | 31,9 |
| Kieselsäure | 0,9 | 0,8 |
| Zeolithpulver | 2,3 | 2,3 |

| **Komponente (B)** | | |
|---|---|---|
| (6-Methyl-2,4-bis(methylthio)phenylen-1,3-diamin / 2-Methyl-4,6-bis(methylthio)phenylen-1,3-diamin (DMTDA) | 11,0 | 11,1 |
| Diethyltoluoldiamin (DETDA) | 1,1 | 1,1 |
| Quarzmehl | 2,3 | 2,3 |
| Quarzsand | 7,8 | 7,9 |
| Kieselsäure | 0,4 | 0,4 |
| | | |
| Stöchiometrie Isocyanatgruppen:Amingruppen (ermittelt anhand der Äquivalentgewichte) | 1,26:1 | 1,26:1 |
| Verbundspannung bei 23°C in N/mm² | 32,9 | 31,6 |
| Verbundspannung bei 100°C in N/mm² | 20,9 | 24,1 |

Aus Tabelle 2 ist zu entnehmen, dass bei Vergleichsbeispiel V1 die Verbundspannung bei einer Erhöhung der Temperatur von 23°C auf 100°C deutlich abfällt. Durch Zugabe der HDI/IPDI-Mischung (XP2838) kann - bei etwa gleicher Referenzverbundspannung bei 23°C - die Verbundspannung bei 100°C deutlich erhöht werden.

## Patentansprüche

1. Mehrkomponenten-Harzsystem umfassend:
a) eine Isocyanatkomponente (A), und
b) eine Aminkomponente (B) umfassend mindestens ein gegenüber Isocyanatgruppen reaktives organisches Amin mit einer mittleren NH-Funktionalität von etwa 2 oder größer,
wobei die Isocyanatkomponente (A) mindestens ein nichtcyklisches aliphatisches Polyisocyanat (A1) mit einer mittleren NCO-Funktionalität von etwa 2 oder größer und mindestens ein cycloaliphatisches Polyisocyanat (A2) mit einer mittleren NCO-Funktionalität von etwa 2 oder größer in einem Verhältnis (A1:A2) (w/w) von 1:0,1 bis 1:10, bevorzugt von 1:0,5 bis 1:5, bevorzugter von 1:0,5 bis 1:1,5 umfasst.

2. Mehrkomponenten-Harzsystem nach Anspruch 1, wobei die Isocyanatkomponente (A) und die Aminkomponente (B) in einem Mengenverhältnis vorliegen, bei dem das numerische Verhältnis von mittlerer NCO-Funktionalität in der Isocyanatkomponente (A) zu mittlerer NH-Funktionalität in der Aminkomponente (B) von 0,3 bis 2,0, bevorzugt von 0,7 bis 1,8, weiter bevorzugt von 1,0 bis 1,5, und am meisten bevorzugt von 1,0 bis 1,3 beträgt.

3. Mehrkomponenten-Harzsystem nach Anspruch 1 oder 2, wobei das mindestens eine nichtcyklische aliphatische Polyisocyanat (A1) ein nichtcyklisches aliphatisches Polyisocyanat auf Basis eines nichtcyklischen aliphatischen Isocyanats mit einem Kohlenstoffgrundgerüst mit 3 bis 30 Kohlenstoffatomen, bevorzugt mit 4 bis 20 Kohlenstoffatomen, ist.

4. Mehrkomponenten-Harzsystem nach einem der vorstehenden Ansprüche, wobei das mindestens eine cycloaliphatische Polyisocyanat (A2) ein cycloaliphatisches Polyisocyanat auf Basis eines cycloaliphatischen Isocyanats mit einem Kohlenstoffgrundgerüst mit 3 bis 30 Kohlenstoffatomen, bevorzugt mit 4 bis 20 Kohlenstoffatomen, ist.

5. Mehrkomponenten-Harzsystem nach einem der vorstehenden Ansprüche, wobei das mindestens eine nichtcyklische aliphatische Polyisocyanat (A1) ein aliphatisches Polyisocyanat auf Basis eines Isocyanats ausgewählt aus der Gruppe bestehend aus Hexamethylendiisocyanat (HDI), Trimethyl-Hexamethylendiisocyanat (TMDI), Pentandiisocyanat (PDI) und Mischungen aus zwei oder mehr davon ist, bevorzugt ein Polyisocyanat auf Basis eines Isocyanats ausgewählt aus der Gruppe bestehend aus Hexamethylendiisocyanat (HDI), Pentandiisocyanat (PDI) und Mischungen daraus ist, bevorzugter ein Polyisocyanat auf Basis von HDI ist.

6. Mehrkomponenten-Harzsystem nach einem der vorstehenden Ansprüche, wobei das mindestens eine cycloaliphatische Polyisocyanat (A2) ein cycloaliphatisches Polyisocyanat auf Basis eines Isocyanats ausgewählt aus der Gruppe bestehend aus 4-Bis-(isocyanatomethyl)cyclohexan (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI), 3(4)-Isocyanatomethyl-1-methyl-cyclohexylisocyanat (IMCI), 5-Isocyanato-1-(isocyanatomethyl)-1,3,3-trimethylcyclohexan, Bis(isocyanatomethyl)norbornan (NBDI), und Mischungen aus zwei oder mehr davon ist, bevorzugt ein Polyisocyanat auf Basis von IPDI ist.

7. Mehrkomponenten-Harzsystem nach einem der vorstehenden Ansprüche, wobei das mindestens eine nichtcyklische aliphatische Polyisocyanat ein HDI-Homopolymer ist, und wobei das mindestens eine cycloaliphatische Polyisocyanat ein IPDI-Homopolymer ist.

8. Mehrkomponenten-Harzsystem nach einem der vorstehenden Ansprüche, wobei das mindestens eine gegenüber Isocyanatgruppen reaktive organische Amin ausgewählt ist aus der Gruppe bestehend aus aliphatischen Aminen, cycloaliphatischen Aminen, araliphatischen Aminen, aromatischen Aminen und Mischungen aus zwei oder mehr davon, bevorzugt aus der Gruppe bestehend aus cycloaliphatischen Aminen, aromatischen Aminen und Mischungen aus zwei oder mehr davon, noch mehr bevorzugt aus der Gruppe bestehend aus 4,4'-Methylen-bis[N-(1-methylpropyl)phenylamin], einen Isomerengemisch aus 6-Methyl-2,4-bis(methylthio)phenylen-1,3-diamin und 2-Methyl-4,6-bis(methylthio)phenylen-1,3-diamin (DMTDA), Diethyltoluoldiamin (DETDA), 4,4'-Methylenbis(2,6-diethylanilin), 4,4'-Methylenbis(N-sec-butylcyclohexanamin), 3,3'-Diaminodiphenylsulfon, N,N'-Di-sec-butyl-p-phenylendiamin und 2,4,6-Trimethyl-m-phenylendiamin sowie Mischungen aus zwei oder mehr davon.

9. Mehrkomponenten-Harzsystem nach einem der vorstehenden Ansprüche, wobei das mindestens eine gegenüber Isocyanatgruppen reaktive organische Amin ausgewählt ist aus der Gruppe bestehend aus einem Isomerengemisch aus (6-Methyl-2,4-bis(methylthio)phenylen-1,3-diamin und 2-Methyl-4,6-bis(methylthio)-phenylen-1,3-diamin (DMTDA), DETDA, und Mischungen daraus, bevorzugt eine Mischung aus DMTDA und DETDA ist.

10. Mehrkomponenten-Harzsystem nach einem der vorstehenden Ansprüche, wobei die Isocyanatkomponente (A) und/oder die Aminkomponente (B) des Weiteren mindestens einen Füllstoff umfasst.

11. Mehrkomponenten-Harzsystem nach einem der vorstehenden Ansprüche, wobei das Mehrkomponenten-Harzsystem ein Zweikomponenten-Harzsystem ist.

12. Mörtelmasse hergestellt durch das Vermischen der Isocyanatkomponente (A) und der Aminkomponente (B) des Mehrkomponenten-Harzsystems nach einem der Ansprüche 1 bis 11.

13. Verwendung der Mörtelmasse nach Anspruch 12 zur chemischen Befestigung von Konstruktionselementen in Bohrlöchern oder Spalten in Bauwerken.

14. Verwendung einer wie in einem der Ansprüche 1 bis 7 definierten Isocyanatkomponente (A) in einem Mehrkomponenten-Harzsystem umfassend eine wie in Anspruch 1 definierte Aminkomponente (B) zur Herstellung einer Mörtelmasse mit erhöhter Verbundspannung bei 80 - 120°C, bevorzugt bei 90 - 110°C, bevorzugter bei etwa 100°C, im Vergleich zu einer Mörtelmasse, welche mit einer Isocyanatkomponente (A) hergestellt wird, welche sich von der verwendeten Isocyanatkomponente (A) dadurch unterscheidet, dass sie kein cycloaliphatisches Polyisocyanat umfasst.

15. Verwendung eines wie in einem der Ansprüche 1, 4, oder 6 definierten cycloaliphatischen Polyisocyanats (A2) mit einer mittleren NCO-Funktionalität von etwa 2 oder größer, bevorzugt von Isophorondiisocyanat, zur Erhöhung der Verbundspannung einer Mörtelmasse bei 80 - 120°C, bevorzugt bei 90 - 110°C, bevorzugter bei etwa 100°C, wobei die Mörtelmasse hergestellt ist aus:
(i) einer Isocyanatkomponente (A) umfassend mindestens ein nichtcyklisches aliphatisches Polyisocyanat (A1) mit einer mittleren NCO-Funktionalität von etwa 2, welches bevorzugt ein Polyisocyanat auf Basis von HDI und/oder PDI ist, und
(ii) einer Aminkomponente (B) umfassend mindestens ein gegenüber Isocyanatgruppen reaktives organisches Amin mit einer mittleren NH-Funktionalität von etwa 2 oder größer,
wobei das cycloaliphatische Polyisocyanat (A2) mit einer mittleren NCO-Funktionalität von etwa 2 oder größer als zusätzliches Polyisocyanat neben dem nichtcyklischen aliphatischen Polyisocyanat (A1) in der Isocyanatkomponente (A) verwendet wird oder einen Teil des nichtcyklischen aliphatischen Polyisocyanats (A1) in der Isocyanatkomponente (A) ersetzt.
